# EUROPÄISCHE PATENTSCHRIFT

(11) **EP 2 008 506 B1**
(45) Veröffentlichungstag und Bekanntmachung des Hinweises auf die Patenterteilung: **05.01.2011**
(21) Anmeldenummer: 08010147.0
(22) Anmeldetag: 04.06.2008
(51) Int. Cl.: A01D 46/26, B25D 9/26

(54) **Handgeführtes Arbeitsgerät**
Manually operated work device
Appareil de travail manuel

(30) Priorität: 27.06.2007 DE 102007029616
(43) Veröffentlichungstag der Anmeldung: 31.12.2008
(73) Patentinhaber: Andreas Stihl AG & Co. KG, 71336 Waiblingen (DE)
(72) Erfinder: Herzog, Markus, Dipl.-Ing., 71384 Weinstadt (DE); Schneider, Andreas, Dipl.-Ing., 71384 Weinstadt (DE); Götzel, Arne, Dipl.-Ing., 71522 Backnang (DE)
(74) Vertreter: Wasmuth, Rolf

(56) Entgegenhaltungen:
- EP-A- 0 426 629
- EP-A- 1 004 233
- US-A- 2 609 813

## Beschreibung

Die Erfindung betrifft ein handgeführtes Arbeitsgerät, insbesondere einen Spezialernter zum Ernten von Früchten oder dgl. wie beispielsweise einen Olivenernter, einen Kaffeeernter oder dgl., der im Oberbegriff des Anspruchs 1 angegebenen Gattung.

Aus der DE 697 00 193 T2 ist ein Baumschüttler bekannt, bei dem ein Werkzeug, nämlich ein Haken, von einem Antriebsmotor hin- und hergehend angetrieben wird. Der Haken ist fest mit der Antriebsstange verbunden. Um die auf den Benutzer übertragenen Vibrationen zu verringern, sind Federelemente vorgesehen, die die Handgriffe von dem Arbeitsgerät schwingungsentkoppelt lagern.

Werden mit dem Werkzeug des handgeführten Arbeitsgeräts dicke Äste oder auch feststehende Objekte gegriffen, kann der Haken die hin- und hergehende Bewegung nicht ausführen. Die am Haken wirkenden Kräfte führen deshalb zu einer Bewegung des Antriebsmotors in dem Gehäuse. Um Beschädigungen des Arbeitsgeräts hierdurch zu vermeiden, muss das Arbeitsgerät vergleichsweise massiv ausgeführt werden. Die massive Bauweise bedingt ein hohes Gewicht des Arbeitgeräts. Die hohen wirkenden Kräfte können außerdem zu einer Verkürzung der Lebensdauer des Arbeitsgeräts führen.

Aus der EP 1 004 233 B1 ist ein Arbeitsgerät mit einem Überlastschutz am Haken bekannt. Bei einer Überlastung löst sich der Haken von der Antriebsstange. Dadurch kann zwar eine übermäßige Beanspruchung des Arbeitsgeräts vermieden werden, allerdings muss der Arbeitsvorgang zum Weiterarbeiten unterbrochen und der Haken erneut an der Antriebsstange befestigt werden. Dies führt zu einem erhöhten Arbeitsaufwand für den Benutzer.

Die US 2,609,813 zeigt einen Meißelhammer, der gegenüber dem Gehäuse mit vorgespannten Federn in beide Richtungen abgestützt ist. Die Übertragung der Antriebsbewegung erfolgt von einem angetriebenen Kolben direkt auf den Meißel. Eine Übertragung der Antriebsbewegung für die Federelemente ist nicht vorgesehen.

Der Erfindung liegt die Aufgabe zugrunde, ein handgeführtes Arbeitsgerät der gattungsgemäßen Art zu schaffen, das ein geringes Gewicht besitzt und ein effizientes Arbeiten ermöglicht.

Diese Aufgabe wird durch ein Arbeitsgerät mit den Merkmalen des Anspruchs 1 gelöst.

Die Einrichtung zur Kraftbegrenzung begrenzt die Kräfte, die auf das Werkzeug wirken. Damit werden gleichzeitig auch die Kräfte begrenzt, die von dem Werkzeug auf den Antriebsmotor übertragen werden, wenn das Werkzeug an einem im Wesentlichen feststehenden Objekt gehalten ist. Dadurch können die am Antriebsmotor wirkenden Kräfte begrenzt werden, so dass ein einfacher, vergleichsweise leichter Aufbau des Arbeitsgeräts möglich ist. Die Kraftbegrenzungseinrichtung führt nicht zu einem Lösen des Hakens von der Antriebsstange. Die Kraftbegrenzung ermöglicht bei Unterschreiten der zulässigen Höchstkraft ein Weiterarbeiten ohne Arbeitsunterbrechung. Dadurch wird ein effizientes Arbeiten möglich.

Es ist vorgesehen, dass die Kraftbegrenzungseinrichtung in Wirkrichtung zwischen dem Antriebsmotor und dem Werkzeug angeordnet ist. Vorteilhaft wirkt der Antriebsmotor über ein Getriebe auf das Werkzeug. Die Kraftbegrenzungseinrichtung ist insbesondere in Wirkrichtung zwischen dem Getriebe und dem Werkzeug angeordnet. Der Antriebsmotor treibt üblicherweise eine Antriebswelle an, die eine rotierende Bewegung ausführt. Diese rotierende Bewegung wird von dem Getriebe in eine hin- und hergehende Bewegung umgewandelt. Die Kraftbegrenzungseinrichtung begrenzt damit die Kraft, die über die hin- und hergehende Bewegung übertragen werden kann. Vorteilhaft wird die Antriebsbewegung über eine Antriebsstange von dem Getriebe zu dem Werkzeug übertragen. Die Kraftbegrenzungseinrichtung ist insbesondere am werkzeugseitigen Ende der Antriebsstange angeordnet. Damit werden auch die an der Antriebsstange wirkenden Kräfte begrenzt, so dass eine übermäßige Belastung der Antriebsstange ebenfalls vermieden ist.

Vorteilhaft umfasst die Kraftbegrenzungseinrichtung mindestens ein vorgespanntes Federelement, über das die Antriebsbewegung in mindestens einer Richtung übertragen wird. Die Vorspannung des Federelements entspricht dabei insbesondere der maximal zulässigen Kraft, die über die Kraftbegrenzungseinrichtung übertragen werden kann. Es kann vorgesehen sein, dass die Kraftbegrenzungseinrichtung nur in einer Richtung, also nur in Zugrichtung oder nur in Druckrichtung wirkt. Insbesondere wirkt die Kraftbegrenzungseinrichtung in beiden Richtungen.

Es ist vorgesehen, dass mindestens ein Federelement sich mit seinen Enden an jeweils mindestens einer Anlage abstützt. Über die Anordnung der beiden Anlagen an den Enden des Federelements lässt sich die Ausgangslänge des Federelements und damit die Vorspannung des Federelements auf einfache Weise einstellen. Die Länge kann dabei einstellbar oder konstruktiv vorgegeben sein. Vorteilhaft ist ein Zugelement vorgesehen, das sich mindestens über die Länge des Federelements erstreckt, wobei das Zugelement mindestens ein freies Ende aufweist, das gegenüber dem zugeordneten Ende des Federelements von dem Federelement weg beweglich ist. Die Beweglichkeit des freien Endes des Zugelements ermöglicht eine Entkopplung der Bewegung des Antriebsmotors von der Bewegung des Hakens und damit auch eine Entkopplung der wirkenden Kräfte. Vorteilhaft ist an dem freien Ende des Zugelements ein Anschlag gebildet, der die Länge des Federelements begrenzt. Vorteilhaft spannt das Zugelement das Federelement vor. Dadurch ergibt sich ein einfacher Aufbau mit wenigen Einzelteilen. Das Zugelement spannt das Federelement insbesondere auf Druck vor. Es kann jedoch auch vorgesehen sein, dass das Zugelement das Federelement auf Zug vorspannt. Das freie Ende des Zugelements ist dabei insbesondere auf das gegenüberliegende Ende des Federelements zu beweglich.

Vorteilhaft sind ein erstes Federelement zur Druckbegrenzung und ein zweites Federelement zur Zugbegrenzung vorgesehen. Insbesondere steht das erste Federelement mit einem ersten Ende mit dem Antriebsmotor in Wirkverbindung und mit einem zweiten Ende mit dem Werkzeug. Das zweite, werkzeugseitige Ende des Federelements ist dabei insbesondere gegenüber dem ersten, motorseitigen Ende in Richtung auf den Antriebsmotor beweglich. Die Beweglichkeit des zweiten, werkzeugseitigen Endes in Richtung auf den Antriebsmotor ermöglicht eine Entkopplung von Antriebsmotor und Werkzeug bei einer übermäßigen Zugbelastung. Bei Überschreiten der Vorspannkraft des Federelements kann das werkzeugseitige Ende zum Antriebsmotor hin ausweichen. Die Kraft, die die Vorspannkraft übersteigt, wird damit in die Feder eingeleitet und nicht zum Antriebsmotor weitergeleitet. Zur Begrenzung der in Druckrichtung wirkenden Kraft ist vorgesehen, dass das zweite Federelement mit einem ersten Ende mit dem Antriebsmotor in Wirkverbindung steht und mit einem zweiten Ende mit dem Werkzeug in Wirkverbindung steht, wobei das zweite, werkzeugseitige Ende gegenüber dem ersten, motorseitigen Ende in Richtung auf das Werkzeug beweglich ist. Dadurch kann bei einer übermäßigen Druckbelastung das werkzeugseitige Ende zum Werkzeug hin ausweichen, so dass Kräfte, die die Vorspannkraft des Federelements übersteigen, nicht zum Antriebsmotor weitergeleitet, sondern in das Federelement eingeleitet werden. Die Begriffe "motorseitig" und "werkzeugseitig" beziehen sich dabei auf die Wirkverbindung der Teile und nicht auf die räumliche Anordnung der Federelemente.

Ein einfacher, kompakter Aufbau der Kraftbegrenzungseinrichtung kann erreicht werden, wenn ein gemeinsames Federelement zur Druckbegrenzung und zur Zugbegrenzung vorgesehen ist. Insbesondere ist das Federelement zwischen zwei Anlagen angeordnet, die mit dem Antriebsmotor wirkverbunden sind und zwischen zwei weiteren Anlagen, die mit dem Werkzeug wirkverbunden sind. Jeweils eine mit dem Werkzeug und eine mit dem Antriebsmotor wirkverbundene Anlage wirken dabei zur Zugbegrenzung und die jeweils andere Anlage zur Druckbegrenzung mit dem Federelement zusammen. Ein einfacher, kompakter Aufbau kann erreicht werden, wenn das Federelement zwischen einer am Umfang des Federelements angeordneten Hülse und einer das Federelement durchragenden Zugstange angeordnet ist, wobei das Federelement in Richtung der Antriebsbewegung in der Hülse und auf der Zugstange beweglich gelagert ist. Vorteilhaft sind zwei äußere Anlagen an der Hülse und zwei innere Anlagen an der Zugstange angeordnet. Dadurch ergibt sich ein einfacher, kompakter Aufbau. Vorteilhaft ist das Werkzeug an der Zugstange festgelegt.

Das Werkzeug ist insbesondere ein Haken.

Ausführungsbeispiele der Erfindung werden im Folgenden anhand der Zeichnung erläutert. Es zeigen:
- Fig. 1: eine schematische Darstellung eines Olivenernters,
- Fig. 2: eine schematische Schnittdarstellung einer ersten Kraftbegrenzungseinrichtung,
- Fig. 3: die Kraftbegrenzungseinrichtung aus Fig. 2 bei einer Druckbelastung,
- Fig. 4: die Kraftbegrenzungseinrichtung aus Fig. 2 bei einer Zugbelastung,
- Fig. 5: eine Schnittdarstellung eines Ausführungsbeispiels einer Kraftbegrenzungseinrichtung,
- Fig. 6: die Kraftbegrenzungseinrichtung aus Fig. 5 bei einer Druckbelastung,
- Fig. 7: die Kraftbegrenzungseinrichtung aus Fig. 5 bei einer Zugbelastung.

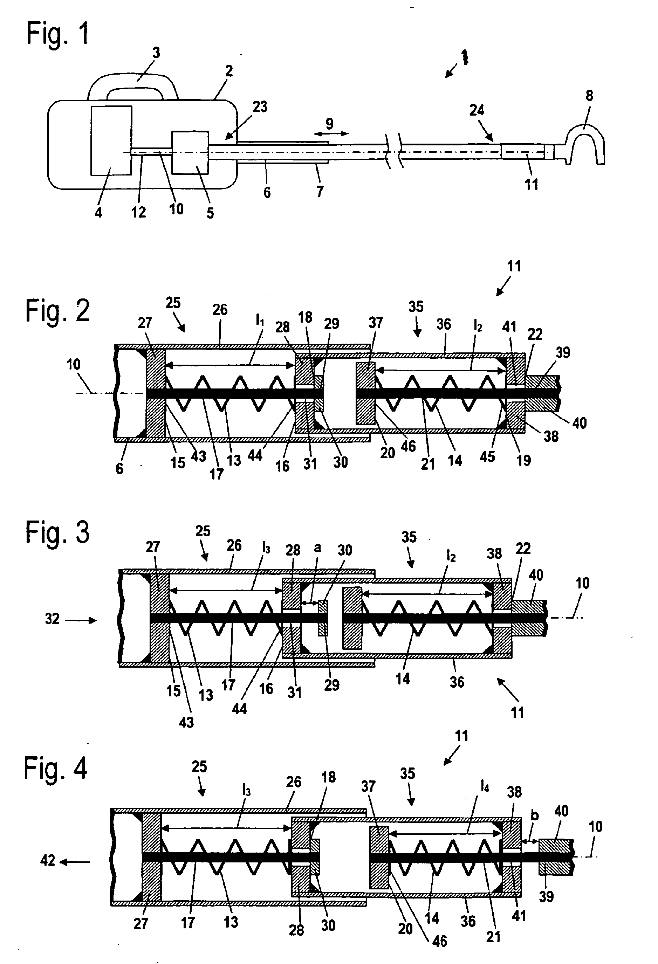

In Fig. 1 ist als Ausführungsbeispiel für ein handgeführtes, insbesondere tragbares Arbeitsgerät ein Spezialernter, nämlich ein Olivenernter 1 gezeigt. Die Erfindung kann auch bei anderen handgeführten, insbesondere tragbaren Arbeitsgeräten, vorteilhaft bei Spezialerntern für Früchte, Nüsse oder dgl. wie beispielsweise Kaffeeernter eingesetzt werden.

Der in Fig. 1 gezeigte Olivenernter 1 besitzt ein Gehäuse 2, an dem ein schematisch gezeigter Handgriff 3 festgelegt ist. Der Handgriff 3 kann dabei vom Gehäuse 2 schwingungsentkoppelt sein. Anstatt oder zusätzlich zu dem Hangriff 3 kann auch ein Traggurt vorgesehen sein. In dem Gehäuse 2 ist ein Antriebsmotor 4 angeordnet, der insbesondere als Verbrennungsmotor, vorzugsweise als Einzylinder-Zweitaktmotor oder als gemischgeschmierter Viertaktmotor ausgebildet ist. Der Antriebsmotor 4 treibt eine Kurbelwelle 12 um eine Achse 10 rotierend an. Die Kurbelwelle 12 ist mit einem Getriebe 5 verbunden, das die rotierende Bewegung der Kurbelwelle 12 in eine hin- und hergehende Antriebsbewegung 9 umwandelt. Das Getriebe treibt eine Antriebsstange 6 hin- und hergehend an. Die Antriebsstange 6 ragt aus dem Gehäuse 2. Die Antriebsstange 6 ist mit ihrem motorseitigen Ende 23 am Gehäuse 2 gelagert und mit dem Getriebe 5 wirkverbunden. An ihrem gegenüberliegenden, werkzeugseitigen Ende 24 ist die Antriebsstange 6 über eine Kraftbegrenzungseinrichtung 11 mit einem Haken 8 verbunden, der das Werkzeug des Olivenernters 1 darstellt. Benachbart zum Gehäuse 2 ist die Antriebsstange 6 von einem Schutzrohr 7 umgeben. Auch am Schutzrohr 7 kann ein Handgriff festgelegt sein. Die Achse 10, um die die Kurbelwelle 12 rotierend angetrieben ist, ist gleichzeitig auch die Längsmittelachse der Antriebsstange 6. Die Antriebsbewegung 9 liegt parallel zur Achse 10.

Die Figuren 2 bis 4 zeigen die Kraftbegrenzungseinrichtung 11 in unterschiedlichen Lastzuständen. In Fig. 2 ist die Kraftbegrenzungseinrichtung 11 in Ruhestellung gezeigt. Die Kraftbegrenzungseinrichtung 11 umfasst eine Druckbegrenzungseinrichtung 25 mit einem ersten Federelement 13 sowie eine Zugbegrenzungseinrichtung 35 mit einem zweiten Federelement 14. Im Ausführungsbeispiel sind die beiden Federelemente 13 und 14 als Schraubendruckfedern ausgebildet. Die Federelemente 13 und 14 können jedoch auch andere Druckfederelemente sein. Die Federelemente 13, 14 können beispielsweise als Tellerfederpakete ausgebildet sein oder aus einem elastischen Kunststoff bestehen. Beide Federelemente 13 und 14 sind vorgespannt. Die Vorspannkraft des ersten Federelements 13 entspricht der maximal in Druckrichtung übertragbaren Kraft und die Vorspannkraft des zweiten Federelements 14 entspricht der maximal in Zugrichtung übertragbaren Kraft. Diese Kraft kann nur dann überschritten werden, wenn die Federelemente 13, 14 bis auf ihre Blocklänge zusammengedrückt werden. Die Federelemente 13 und 14 sind jedoch so ausgelegt, dass ein Zusammendrücken auf Blocklänge bei den im Betrieb üblicherweise auftretenden Kräften nicht möglich ist.

Die Druckbegrenzungseinrichtung 25 ist in einem Rohrabschnitt 26 der Antriebsstange 6 ausgebildet. Vorteilhaft ist der Rohrabschnitt 26 der dem Gehäuse 2 abgewandt liegende Abschnitt der rohrförmig ausgebildeten Antriebsstange 6. Die Druckbegrenzungseinrichtung 25 besitzt eine Grundplatte 27, die fest im Rohrabschnitt 26 angeordnet, beispielsweise eingeschweißt ist. An der Grundplatte 27 ist eine Zugstange 17 festgelegt, die von der Grundplatte 27 in Richtung auf den Haken 8 ragt. Die Zugstange 17 durchragt dabei das erste Federelement 13. Das erste Federelement 13 stützt sich mit einem ersten Ende 43 an einer ersten Anlage 15 ab, die an der Grundplatte 27 gebildet ist. Das erste Ende 43 steht damit mit dem Getriebe 5 in Wirkverbindung. Das andere, zweite Ende 44 des ersten Federelements 13 liegt an einer zweiten Anlage 16 an, die an einer Druckplatte 28 ausgebildet ist. Die Zugstange 17 ragt durch eine mittige Öffnung 31 der Druckplatte 28. Das auf der dem ersten Federelement 13 abgewandten Seite der Druckplatte 28 angeordnete freie Ende 29 der Zugstange 17 ist nicht fest mit der Druckplatte 28 verbunden. An dem freien Ende 29 ist eine Endplatte 30 festgelegt, die mit der Druckplatte 28 einen Anschlag 18 bildet. Die Zugstange 17 begrenzt damit die in Fig. 2 gezeigte Ausgangslänge l₁ des Federelements 13. In der Ausgangslänge l₁ ist das erste Federelement 13 auf eine konstruktiv vorgegebene Kraft vorgespannt.

Die Zugbegrenzungseinrichtung 35 umfasst eine Hülse 36, die fest mit der Druckplatte 28 der Druckbegrenzungseinrichtung 25 verbunden ist. An dem der Druckbegrenzungseinrichtung 25 abgewandten Seite der Hülse 36 ist eine Druckplatte 38 angeordnet, die fest mit der Hülse 36 verbunden ist. Die Druckplatte 28, die Hülse 36 und die Druckplatte 38 bilden damit ein weitgehend geschlossenes Gehäuse. In diesem Gehäuse ist das zweite Federelement 14 angeordnet. Das zweite Federelement 14 stützt sich mit einem ersten Ende 45 an einer ersten Anlage 19 ab, die an der Druckplatte 38 ausgebildet ist. Das gegenüberliegende, zweite Ende 46 des zweiten Federelements 14 liegt an einer zweiten Anlage 20 an, die an einer Grundplatte 37 ausgebildet ist. An der Grundplatte 37 ist eine Zugstange 21 festgelegt, die das zweite Federelement 14 durchragt. Die Zugstange 21 ragt durch eine Öffnung 41 der Druckplatte 38. Das an der dem Federelement 14 abgewandten Seite der Druckplatte 38 angeordnete freie Ende 39 der Zugstange 21 ist an einem Stutzen 40 festgelegt, an dem der Haken 8 angeordnet ist. Der Stutzen 40 bildet mit der Druckplatte 38 einen Anschlag 22, der die in Fig. 2 gezeigte Ausgangslänge l₂ des zweiten Federelements 14 begrenzt. Auch das zweite Federelement 14 ist in seiner Ausgangslänge l₂ auf eine konstruktiv vorgegebene Kraft vorgespannt.

Fig. 2 zeigt die Kraftbegrenzungseinrichtung 11 in einem Zustand, in dem keine Kräfte wirken oder in dem die Kräfte in Druckrichtung kleiner als die Vorspannkraft des ersten Federelements 13 und die Kräfte in Zugrichtung kleiner als die Vorspannkraft des zweiten Federelements 14 sind. Bei diesen Kräften wirken die Federelemente 13 und 14 wie eine feste Verbindung zwischen der Grundplatte 27 und der Druckplatte 28 bzw. der Grundplatte 37 und der Druckplatte 38. Die hin- und hergehende Antriebsbewegung 9 des Getriebes 5 wird direkt auf den Haken 8 übertragen.

Fig. 3 zeigt die Kraftbegrenzungseinrichtung 11 in einem Zustand, in dem eine Druckkraft 32 vom Antriebsmotor 4 bzw. dem Getriebe 5 auf die Kraftbegrenzungseinrichtung 11 übertragen wird. Die Druckkraft 32 übersteigt die Vorspannkraft des ersten Federelements 13. Dadurch wird das erste Federelement 13 auf eine verkürzte Länge l₃ zusammengedrückt. Die Endplatte 30 bewegt sich aufgrund der starren Verbindung mit der Zugstange 17 und der Grundplatte 27 von der Druckplatte 28 weg und weist zur Druckplatte 28 einen Abstand a auf, der der Längendifferenz der Längen l₁ und l₃ entspricht. Die Druckkraft 32 bewirkt damit lediglich eine Verkürzung des ersten Federelements 13, jedoch keine Bewegung des Hakens 8. Auf den Haken 8 wird die Druckkraft 32 nicht übertragen. Die Druckkraft 32, die auftreten kann, wenn der Haken 8 an einem nahezu unbeweglichen Element, beispielsweise einem starren Ast, angeordnet ist, wird dadurch nicht auf den Haken 8 übertragen. Dadurch entstehen auch am Antriebsmotor 4 keine entsprechenden Reaktionskräfte, die zu Beschädigungen des Gehäuses 2 führen könnten. Die Zugbegrenzungseinrichtung 35 überträgt Druckkräfte 32 direkt von der Druckplatte 38 auf den Stutzen 40. Druckkräfte 32, die die Vorspannkraft des ersten Federelements 13 übersteigen, bewirken eine Verkürzung des Federelements 13. Diese die Vorspannkraft übersteigenden Kräfte werden über die Druckbegrenzungseinrichtung 25 nicht übertragen, so dass die am Haken 8 wirkende Druckkraft 32 auf dem Niveau der Vorspannkraft des ersten Federelements 13 bleibt.

Die Zugbegrenzungseinrichtung 35 wirkt bei einer in Fig. 4 gezeigten Zugkraft 42. Eine Zugkraft 42 wird von der Druckbegrenzungseinrichtung 25 über die Zugstange 17, den Anschlag 18 und die Druckplatte 28 direkt auf die Zugbegrenzungseinrichtung 35 übertragen. Bei einer Zugkraft 42, die die Vorspannkraft des zweiten Federelements 14 übersteigt, wird das zweite Federelement 14 zusammengedrückt. Dabei bewegt sich das zweite, mit dem Haken 8 verbundene Ende 46 des zweiten Federelements 14 in Richtung auf den Haken 8. Das zweite Federelement 14 wird auf eine Länge l₄ verkürzt. Das freie Ende 39 der Zugstange 21 bewegt sich durch die Öffnung 41. Der Stutzen 40 hat dadurch einen Abstand b zur Druckplatte 38.

Bei der in Fig. 3 gezeigten Druckbelastung 32 bewegt sich das zweite Ende 44 des ersten Federelements 13 zum ersten Ende 43 und in Richtung auf den Antriebsmotor 4. Die Druckbegrenzungseinrichtung 25 wird in Richtung der Achse 10 verkürzt. Bei einer Zugbelastung 42 wird die Zugbegrenzungseinrichtung 35 in Richtung der Achse 10 verlängert.

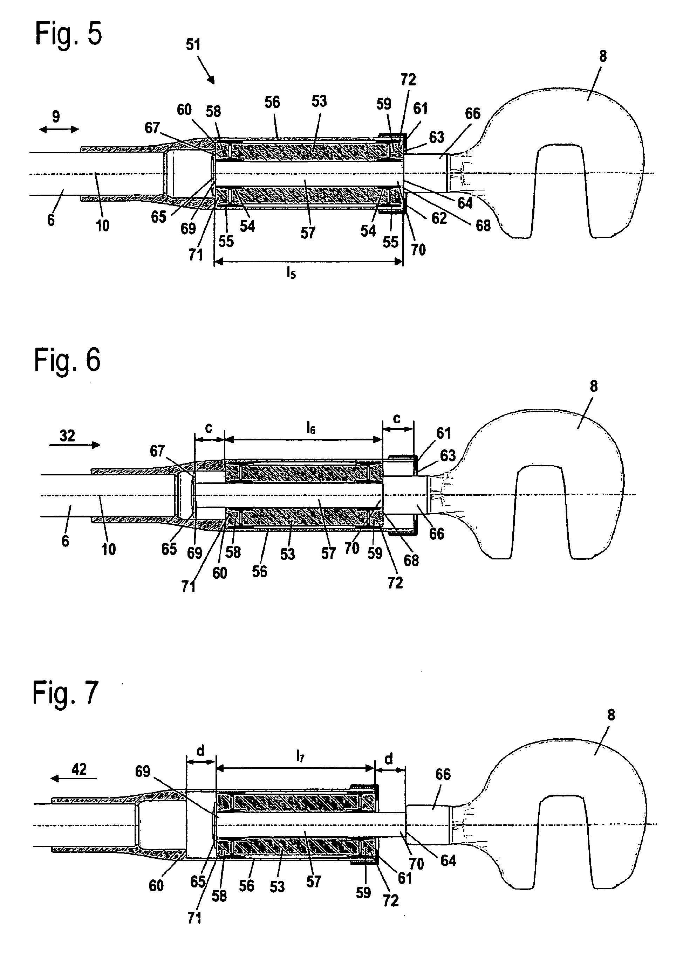

Die Figuren 5 bis 7 zeigen ein Ausführungsbeispiel einer Kraftbegrenzungseinrichtung 51, die ein einziges Federelement 53 zur Zugbegrenzung und zur Druckbegrenzung umfasst. Die Kraftbegrenzungseinrichtung 51 umfasst eine Hülse 56, die am werkzeugseitigen Ende 24 der Antriebsstange 6 festgelegt ist und die ein Gehäuse der Kraftbegrenzungseinrichtung 51 bildet. In der Hülse 56 ist das Federelement 53 angeordnet, das beispielsweise als Schraubendruckfeder oder als Tellerfederpaket ausgebildet sein kann. An seinem motorseitigen Ende besitzt das als Druckfederelement ausgebildete Federelement 53 eine motorseitige Endkappe 58 und an seinem werkzeugseitigen Ende eine werkzeugseitige Endkappe 59. Die Endkappen 58 und 59 dienen zur Abstützung des Federelements 53 und können auch entfallen. Die motorseitige Endkappe 58 bildet damit ein erstes Ende 71 des Federelements 53 und die werkzeugseitige Endkappe 59 bildet ein zweites Ende 72 des Federelements 53. Die beiden Enden 71 und 72 stützen sich im Bereich ihres Außenumfangs an einer ersten äußeren Anlage 60 und einer zweiten äußeren Anlage 61 an der Hülse 56 ab. Die zweite äußere Anlage 61 ist dabei an einem Deckel 62 der Hülse 56 ausgebildet, mit dem die Hülse 56 in Richtung auf den Haken 8 verschlossen ist. Die erste Anlage 60 ist an der Endkappe 58 ausgebildet und die zweite Anlage 61 an der Endkappe 59.

Das Federelement 53 ist mit zwei Außenlagern 55 in Richtung der Achse 10 beweglich in der Hülse 56 gelagert. Das Federelement 53 besitzt zwei Innenlager 54, mit denen das Federelement 53 gegenüber einer Zugstange 57 in Richtung der Achse 10 beweglich ist. Die Zugstange 57 durchragt das Federelement 53. Am motorseitigen Ende 69 besitzt die Zugstange 57 eine Scheibe 65, die eine erste innere Anlage 67 für das Federelement 53 bildet. An ihrem werkzeugseitigen Ende 70 besitzt die Zugstange 57 einen Absatz 64, der eine zweite innere Anlage 68 für das Federelement 53 bildet. Das Federelement 53 ist demnach zwischen den beiden äußeren Anlagen 60 und 61 der Hülse 56 und zwischen den beiden inneren Anlagen 67 und 68 der Zugstange 57 gehalten und zwischen diesen Anlagen 60, 61, 67, 68 auf eine Ausgangslänge l₅ vorgespannt.

Der Absatz 64 ist an einem Stutzen 66 gebildet, an dem der Haken 8 festgelegt ist. Vorteilhaft ist das Federelement 53 sowohl zwischen den beiden Anlagen 60 und 61 als auch zwischen den beiden Anlagen 67 und 68 vorgespannt. Es kann jedoch auch vorgesehen sein, dass zwei der Anlagen geringfügig Spiel zueinander aufweisen. Um eine Vorspannung zwischen beiden Paaren von Anlagen zu erreichen, können Mittel zur Einstellung des Abstands der Anlagen zueinander vorgesehen sein.

Fig. 6 zeigt die Kraftbegrenzungseinrichtung 51 bei einer Druckbelastung 32. Die Druckbelastung 32 bewirkt, dass die Hülse 56 in Richtung auf den Haken 8 geschoben wird. Das Federelement 53 stützt sich über die Endkappe 58 an der ersten, motorseitigen, äußeren Anlage 60 ab. Die zweite äußere Anlage 61 besitzt zur Endkappe 59 einen Abstand c. Die Zugstange 57, die durch die in Fig. 5 gezeigte Öffnung 63 des Deckels 62 ragt, ist in die Hülse 56 verschoben, so dass der Stutzen 66 teilweise in die Hülse 56 eintaucht. Die Endkappe 59 liegt an der zweiten, werkzeugseitigen inneren Anlage 68 der Zugstange 57 an. Das erste, motorseitige Ende 59 der Zugstange 57 besitzt einen Abstand c zum ersten Ende 71 des Federelements 53. Das Federelement 53 ist auf eine Länge l₆ verkürzt. Die Länge l₆ ist um den Abstand c kleiner als die Länge l₅. Eine Druckbelastung 32, die größer als die Vorspannkraft des Federelements 53 ist, bewirkt ein Zusammendrücken des Federelements 53. Die Kraft, die die Vorspannkraft des Federelements 53 übersteigt, wird dadurch nicht auf den Haken 8 übertragen. Die am Haken 8 wirkende Kraft bleibt konstant auf dem Niveau der Vorspannkraft des Federelements 53. Bei einer Druckbelastung 32 bewegt sich das zweite Ende 72 des Federelements 53 in Richtung auf den Antriebsmotor 4.

Fig. 7 zeigt die Kraftbegrenzungseinrichtung 51 bei einer Zugbelastung 42. Die Antriebsstange 6 zieht bei einer Zugbelastung 42 die Hülse 56 von der Zugstange 57 und dem Haken 8 weg. Der Absatz 64 besitzt zum zweiten Ende 72 des Federelements 53 einen Abstand d. Entsprechend besitzt das erste Ende 69 der Zugstange 57 einen Abstand d zur motorseitigen, ersten Anlage 60. Das Federelement 53 ist auf eine Länge l₇ verkürzt. Das erste Ende 71 des Federelements, das mit dem Haken 8 wirkverbunden ist, hat sich in Richtung auf den Haken 8 bewegt.

Es kann auch vorgesehen sein, ein oder mehrere Federelemente als Zugfederelemente auszubilden und auf Zug vorzuspannen.

## Patentansprüche

1. Handgeführtes Arbeitsgerät mit einem Gehäuse (2), in dem ein Antriebsmotor (4) angeordnet ist, und mit einem Werkzeug, das von dem Antriebsmotor (4) hin- und hergehend angetrieben ist,
wobei eine Einrichtung (11, 51) zur Begrenzung der von dem Antriebsmotor (4) auf das Werkzeug ausgeübten Kraft vorgesehen ist,
**dadurch gekennzeichnet, dass** die Kraftbegrenzungseinrichtung (11, 51) in Wirkrichtung zwischen dem Antriebsmotor (4) und dem Werkzeug angeordnet ist und dass die Kraftbegrenzungseinrichtung (11, 51) mindestens ein vorgespanntes Federelement (13, 14, 53) umfasst, über das die Antriebsbewegung (9) in mindestens einer Richtung übertragen wird.

2. Arbeitsgerät nach Anspruch 1,
**dadurch gekennzeichnet, dass** der Antriebsmotor (4) über ein Getriebe (5) auf das Werkzeug wirkt, wobei die Kraftbegrenzungseinrichtung (11, 51) in Wirkrichtung zwischen dem Getriebe (5) und dem Werkzeug angeordnet ist, wobei die Antriebsbewegung (9) über eine Antriebsstange (6) von dem Getriebe (5) zu dem Werkzeug übertragen wird und wobei die Kraftbegrenzungseinrichtung (11, 51) am werkzeugseitigen Ende (24) der Antriebsstange (6) angeordnet ist.

3. Arbeitsgerät nach Anspruch 1,
**dadurch gekennzeichnet, dass** mindestens ein Federelement (13, 14, 53) sich mit seinen Enden (43, 44, 45, 46, 71, 72) an jeweils mindestens einer Anlage (15, 16, 19, 20, 60, 61, 67, 68) abstützt.

4. Arbeitsgerät nach einem der Ansprüche 1 bis 3,
**dadurch gekennzeichnet, dass** ein Zugelement vorgesehen ist, das sich mindestens über die Länge des Federelements (13, 14, 53) erstreckt, wobei das Zugelement mindestens ein freies Ende (29, 39, 69, 70) aufweist, das gegenüber dem zugeordneten Ende (44, 45, 71, 72) des Federelements (13, 14, 53) von dem Federelement (13, 14, 53) weg beweglich ist.

5. Arbeitsgerät nach Anspruch 4,
**dadurch gekennzeichnet, dass** am freien Ende (29, 39, 69, 70) des Zugelements ein Anschlag (18, 22, 67, 68) gebildet ist, der die Länge (l₁, l₂, l₅) des Federelements (13, 14, 53) begrenzt, wobei das Zugelement das Federelement (13, 14, 53) vorspannt.

6. Arbeitsgerät nach einem der Ansprüche 1 bis 5,
**dadurch gekennzeichnet, dass** ein erstes Federelement (13) zur Druckbegrenzung und ein zweites Federelement (14) zur Zugbegrenzung vorgesehen ist und dass das erste Federelement (13) mit einem ersten Ende (43) mit dem Antriebsmotor (4) in Wirkverbindung steht und mit einem zweiten Ende (44) mit dem Werkzeug in Wirkverbindung steht, wobei das zweite, werkzeugseitige Ende (44) gegenüber dem ersten, motorseitigen Ende (43) in Richtung auf den Antriebsmotor (4) beweglich ist, wobei das zweite Federelement (14) mit einem ersten Ende (45) mit dem Antriebsmotor (4) in Wirkverbindung steht und mit einem zweiten Ende (46) mit dem Werkzeug in Wirkverbindung steht, wobei das zweite, werkzeugseitige Ende (46) gegenüber dem ersten, motorseitigen Ende (45) in Richtung auf das Werkzeug beweglich ist.

7. Arbeitsgerät nach einem der Ansprüche 1 bis 5,
**dadurch gekennzeichnet, dass** ein gemeinsames Federelement (53) zur Druckbegrenzung und zur Zugbegrenzung vorgesehen ist, wobei das Federelement (53) zwischen zwei Anlagen (60, 61) angeordnet ist, die mit dem Antriebsmotor (4) wirkverbunden sind, und wobei das Federelement (53) zwischen zwei weiteren Anlagen (67, 68) angeordnet ist, die mit dem Werkzeug wirkverbunden sind.

8. Arbeitsgerät nach Anspruch 7,
**dadurch gekennzeichnet, dass** das Federelement (53) zwischen einer am Umfang des Federelements (53) angeordneten Hülse (56) und einer das Federelement (53) durchragenden Zugstange (57) angeordnet ist, wobei das Federelement (53) in Richtung der Antriebsbewegung (9) in der Hülse (56) und auf der Zugstange (57) beweglich gelagert ist.

9. Arbeitsgerät nach Anspruch 8,
**dadurch gekennzeichnet, dass** zwei äußere Anlagen (60, 61) an der Hülse (56) und zwei innere Anlagen (67, 68) an der Zugstange (57) angeordnet sind, wobei das Werkzeug vorteilhaft an der Zugstange (57) festgelegt ist.

10. Arbeitsgerät nach einem der Ansprüche 1 bis 9,
**dadurch gekennzeichnet, dass** das Werkzeug ein Haken (8) ist.

## Claims

1. Manually operated work device with a housing (2) in which is arranged a drive motor (4), and with a tool which is driven to and fro by the drive motor (4),
a device (11, 51) being provided for limiting the force exerted by the drive motor (4) on the tool,
**characterised in that** the said force-limiting device (11, 51) is arranged in the direction of action between the drive motor (4) and the tool, and the force-limiting device (11, 51) comprises at least one pre-stressed spring element (13, 14, 53) by means of which the drive movement (9) is transmitted in at least one direction.

2. Word device according to claim 1,
**characterised in that** the drive motor (4) acts upon the tool via a gear system (5), the force-limiting device (11, 51) is arranged in the action direction between the said gear system (5) and the tool, the drive movement (9) is transmitted from the gear system (5) to the tool by means of a drive-rod (6), and the force-limiting device (11, 51) is arranged at the end (24) of the said drive-rod (6) near the tool.

3. Work device according to claim 1,
**characterised in that** at least one spring element (13, 14, 53) is supported with its ends (43, 44, 45, 46, 71, 72 (against at least one respective abutment (15, 16, 19, 20, 60, 61, 67, 68).

4. Work device according to any of claims 1 to 3,
**characterised in that** a tension element is provided, which extends at least over the length of the spring element (13, 14, 53), and the tension element has at least one free end (29, 39, 69, 70) which can be moved away relative to the associated end (44, 45, 71, 72) of the spring element (13, 14, 53) by the spring element (13, 14, 53).

5. Work device according to claim 4,
**characterised in that** at the free end (29, 39, 69, 70) of the tension element a stop (18, 22, 67, 68) is formed, which limits the length (l₁, l₂, l₅) of the spring element (13, 14, 53) so that the tension element pre-stresses the spring element (13, 14, 53).

6. Work device according to any of claims 1 to 5,
**characterised in that** a first spring element (13) is provided for limiting the compression and a second spring element (14) for limiting the tension, the said first spring element (13) is actively connected at a first end (43) to the drive motor (4) and at a second end (44) to the tool in such manner that the said second end (44) on the tool side can move relative to the first end (43) on the motor side in the direction towards the drive motor (4), the second spring element (14) is actively connected at a first end (45) to the drive motor (4) and at a second end (46) to the tool, and the said second end (46) on the tool side can move relative to the first end (45) on the motor side in the direction towards the tool.

7. Work device according to any of claims 1 to 5,
**characterised in that** a common spring element (53) for limiting the compression and the tension is provided, such that the spring element (53) is arranged between two abutments (60, 61) which are actively connected to the drive motor (4) and such that the spring element (53) is arranged between two further abutments (67, 68) which are actively connected to the tool.

8. Work device according to claim 7,
**characterised in that** the spring element (53) is arranged between a sleeve (56) positioned at the periphery of the spring element (53) and a tension rod (57) which extends through the spring element (53), and the spring element (53) is fitted so that it can move in the sleeve (56) and on the tension rod (57) in the direction of the drive movement (9).

9. Work device according to claim 8,
**characterised in that** two outer abutments (60, 61)are arranged on the sleeve (56) and two inner abutments (67, 68) are arranged on the tension rod (57), and the tool is advantageously attached to the tension rod (57).

10. Work device according to any of claims 1 to 9,
**characterised in that** the tool is a clamping hook (8).

## Revendications

1. Appareil tenu à la main, avec un carter (2) dans lequel est disposé un moteur d'entraînement (4), et un outil qui est entraîné suivant un mouvement de va-et-vient par le moteur d'entraînement (4), étant précisé qu'il est prévu un dispositif (11, 51) pour limiter la force exercée sur l'outil par le moteur d'entraînement (4), **caractérisé en ce que** le dispositif limiteur de force (11, 51) est disposé, dans le sens d'action, entre le moteur d'entraînement (4) et l'outil, et **en ce que** le dispositif limiteur de force (11, 51) comprend au moins un élément élastique contraint (13, 14, 53) par l'intermédiaire duquel le mouvement d'entraînement (9) est transmis dans au moins un sens.

2. Appareil selon la revendication 1,
**caractérisé en ce que** le moteur d'entraînement (4) agit sur l'outil par l'intermédiaire d'une transmission (5), le dispositif limiteur de force (11, 51) étant disposé, dans le sens d'action, entre la transmission (5) et l'outil, le mouvement d'entraînement (9) étant transmis de la transmission (5) à l'outil par l'intermédiaire d'une tige d'entraînement (6) et le dispositif limiteur de force (11, 51) étant disposé à l'extrémité (24) de la tige d'entraînement (6) située côté outil.

3. Appareil selon la revendication 1,
**caractérisé en ce qu'**au moins un élément élastique (13, 14, 53) s'appuie avec ses extrémités (43, 44, 45, 46, 71, 72) contre au moins un appui (15, 16, 19, 20, 60, 61, 67, 68).

4. Appareil selon l'une des revendications 1 à 3,
**caractérisé en ce qu'**il est prévu un élément de traction qui s'étend au moins sur la longueur de l'élément élastique (13, 14, 53), l'élément de traction présentant au moins une extrémité libre (29, 39, 69, 70) qui, par rapport à l'extrémité associée (44, 45, 71, 72) de l'élément élastique (13, 14, 53), est apte à être éloignée dudit élément élastique (13, 14, 53).

5. Appareil selon la revendication 4,
**caractérisé en ce qu'**il prévu, formée sur l'extrémité libre (29, 39, 69, 70) de l'élément de traction, une butée (18, 22, 67, 68) qui limite la longueur (l₁, l₂, l₅) de l'élément élastique (13, 14, 53), l'élément de traction soumettant l'élément élastique (13, 14, 53) à une contrainte préalable.

6. Appareil selon l'une des revendications 1 à 5,
**caractérisé en ce qu'**il est prévu un premier élément élastique (13) pour limiter la pression, et un second élément élastique (14) pour limiter la traction, et **en ce que** le premier élément élastique (13), avec une première extrémité (43), est en relation fonctionnelle avec le moteur d'entraînement (4) et, avec une seconde extrémité (44), est en relation fonctionnelle avec l'outil, la seconde extrémité située côté outil (44) étant mobile par rapport à la première extrémité située côté moteur (43) en direction du moteur d'entraînement (4), le second élément élastique (14), avec une première extrémité (45), étant en relation fonctionnelle avec le moteur (4) et, avec une seconde extrémité (46), en relation fonctionnelle avec l'outil, et la seconde extrémité située côté outil (46) étant mobile par rapport à la première extrémité située côté moteur (45) en direction de l'outil.

7. Appareil selon l'une des revendications 1 à 5,
**caractérisé en ce qu'**il est prévu un élément élastique commun (53) pour limiter la pression et pour limiter la traction, l'élément élastique (53) étant disposé entre deux appuis (60, 61) qui sont en relation fonctionnelle avec le moteur d'entraînement (4), et l'élément élastique (53) étant disposé entre deux autres appuis (67, 68) qui sont en relation fonctionnelle avec l'outil.

8. Appareil selon la revendication 7,
**caractérisé en ce que** l'élément élastique (53) est disposé entre un manchon (56) qui est disposé sur la circonférence de l'élément élastique (53) et une tige de traction (57) qui traverse l'élément élastique (53), l'élément élastique (53) étant monté mobile dans le sens du mouvement d'entraînement (9) dans le manchon (56) et sur la tige de traction (57).

9. Appareil selon la revendication 8,
**caractérisé en ce que** deux appuis extérieurs (60, 61) sont disposés sur le manchon (56) et deux appuis intérieurs (67, 68) sont disposés sur la tige de traction (57), l'outil étant avantageusement fixé à la tige de traction (57).

10. Appareil selon l'une des revendications 1 à 9,
**caractérisé en ce que** l'outil est un crochet (8).
